# EUROPEAN PATENT APPLICATION

(11) **EP 4 131 050 A1**
(43) Date of publication of application: **08.02.2023**
(21) Application number: 22188251.7
(22) Date of filing: 02.08.2022
(51) Int. Cl.: G06F 30/12, G06F 30/17, G06F 111/12, G06F 119/20

(54) **SYSTEM AND METHOD FOR DESCRIBING A COMPONENT IN A COMPUTER-AIDED DESIGN (CAD) ENVIRONMENT**

(30) Priority: 04.08.2021 US 202117394302
(71) Applicant: PRATT & WHITNEY CANADA CORP., Longueuil, Québec J4G 1A1 (CA)
(72) Inventor: DUPRE, Francois, (01BE5) Longueuil, J4G 1A1 (CA); GELINAS, Simon, (01BE5) Longueuil, J4G 1A1 (CA)
(74) Representative: Dehns

(57) **Abstract**

A method for augmenting a three-dimensional model of a component in a computer-aided design (CAD) environment includes indexing a first three-dimensional surface representation of a first component surface of the three-dimensional CAD model as a first function-attributed surface (FAS) element by assigning the first three-dimensional surface representation a unique first FAS ID which associates the first FAS element with the component. The first component surface is one of a plurality of component surfaces of the three-dimensional CAD model of the component. The method further includes storing at least one first scalar attribute for the first FAS element as a first FAS dataset and assigning the unique first FAS ID to the first FAS dataset. The method further includes configuring the three-dimensional CAD model to display a FAS tree that includes a plurality of FAS elements associated with the component.

## Description

### BACKGROUND

### 1. Technical Field

This disclosure relates generally to computer-aided design (CAD), and more particularly to describing component manufacturing information in a CAD environment.

### 2. Background Information

Conventionally, engineers and designers have used computer-aided design (CAD) systems to develop two-dimensional engineering drawings for relaying component specifications and geometric dimensioning and tolerancing ("GD&T") information to manufacturers. However, the amount of information that can be conveyed using two-dimensional drawings (e.g., isometric and axonometric drawings) to represent three-dimensional components is limited. The geometrical definitions of some components (e.g., castings), such as those having organic shapes, may be too complex to be adequately described by two-dimensional drawings prepared using current industry standards. Further, the use of different industry standards, by various entities, for conveying component geometrical definitions may complicate component design and manufacture. Further still, conventional two-dimensional drawings cannot be directly used by manufacturing equipment or software outside the CAD environment. Accordingly, there is a need for improved methods and systems for describing components in a CAD environment, which addresses one or more of the above-discussed concerns.

### SUMMARY

It should be understood that any or all of the features or embodiments described herein can be used or combined in any combination with each and every other feature or embodiment described herein unless expressly noted otherwise.

According to an aspect of the present disclosure, a method for augmenting a three-dimensional model of a component in a computer-aided design (CAD) environment is provided. The method includes indexing a first three-dimensional surface representation of a first component surface of a three-dimensional CAD model having a plurality of component surfaces as a first function-attributed surface (FAS) element by assigning the first three-dimensional surface representation a unique first FAS ID which associates the first FAS element with the component. The method further includes storing at least one first scalar attribute for the first FAS element as a first FAS dataset and assigning the unique first FAS ID to the first FAS dataset and generating a FAS tree including a plurality of FAS elements corresponding to the respective plurality of component surfaces, the plurality of FAS elements including the first FAS element.

According to another aspect of the present disclosure, a method for augmenting a three-dimensional model of a component in a computer-aided design (CAD) environment is provided. The method includes indexing, in a three-dimensional CAD model of the component, a first three-dimensional surface representation of a first component surface of the three-dimensional CAD model as a first function-attributed surface (FAS) element by assigning the first three-dimensional surface representation a unique first FAS ID which associates the first FAS element with the component. The first component surface is one of a plurality of component surfaces of the three-dimensional CAD model of the component. The method further includes storing at least one first scalar attribute for the first FAS element as a first FAS dataset and assigning the unique first FAS ID to the first FAS dataset. The method further includes configuring the three-dimensional CAD model to, when executed in the CAD environment, display on a screen associated with the CAD environment a FAS tree that includes a plurality of FAS elements associated with the component and corresponding to respective component surfaces of the plurality of component surfaces. The plurality of FAS elements includes the first FAS element.

In any of the aspects or embodiments described above and herein, the method may further include indexing, in the three-dimensional CAD model of the component, a second three-dimensional surface representation of a second component surface of the three-dimensional CAD model as a second FAS element by assigning the second three-dimensional surface representation a unique second FAS ID which associates the second FAS element with the component and storing at least one second scalar attribute for the second FAS element as a second FAS dataset in the FAS database and assigning the unique second FAS ID to the second FAS dataset. The plurality of FAS elements includes the second FAS element.

In any of the aspects or embodiments described above and herein, the method may further include linking the FAS tree to the first FAS dataset and the first FAS element with the unique first FAS ID.

In any of the aspects or embodiments described above and herein, the method may further include displaying the first FAS dataset with the unique first FAS ID in the FAS tree.

In any of the aspects or embodiments described above and herein, displaying the first FAS dataset may include displaying the first FAS dataset formatted according to an engineering industry standard.

In any of the aspects or embodiments described above and herein, the method may further include generating a graphical user interface and receiving product manufacturing information (PMI) for the first FAS element from a user via the graphical user interface and storing the PMI in the first FAS dataset.

In any of the aspects or embodiments described above and herein, the method may further include indexing, in the three-dimensional CAD model of the component, a geometrical representation of a non-surface geometrical element of the three-dimensional CAD model as a second FAS element by assigning the geometrical representation a unique second FAS ID which associates the second FAS element with the component and storing at least one second scalar attribute for the second FAS element as a second FAS dataset in the FAS database and assigning the unique second FAS ID to the second FAS dataset. The plurality of FAS elements includes the second FAS element.

In any of the aspects or embodiments described above and herein, the non-surface geometrical element may be one of a point, a line, an axis, a plane, or a volume of the three-dimensional CAD model.

According to another aspect of the present disclosure, a system for augmenting a three-dimensional model of a component in a computer-aided design (CAD) environment includes a processor and memory in signal communication with the processor. The memory contains instructions recorded therein which, when executed by the processor, cause the processor to: index, in a three-dimensional CAD model of the component, a first three-dimensional surface representation of a first component surface of the three-dimensional CAD model as a first function-attributed surface (FAS) element by assigning the first three-dimensional surface representation a unique first FAS ID which associates the first FAS element with the component, the first component surface being one of a plurality of component surfaces of the three-dimensional CAD model of the component; store at least one first scalar attribute for the first FAS element as a first FAS dataset in a FAS database and assign the unique first FAS ID to the first FAS dataset; and configure the three-dimensional CAD model to, when executed in the CAD environment, display on a screen associated with the CAD environment a FAS tree that includes a plurality of FAS elements associated with the component and corresponding to respective component surfaces of the plurality of component surfaces, the plurality of FAS elements including the first FAS element.

In any of the aspects or embodiments described above and herein, the memory contains instructions recorded therein which, when executed by the processor, may further cause the processor to: index, in the three-dimensional CAD model of the component, a second three-dimensional surface representation of a second component surface of the three-dimensional CAD model as a second FAS element by assigning the second three-dimensional surface representation a unique second FAS ID which associates the second FAS element with the component; and store at least one second scalar attribute for the second FAS element as a second FAS dataset in the FAS database and assign the unique second FAS ID to the second FAS dataset. The plurality of FAS elements includes the second FAS element.

In any of the aspects or embodiments described above and herein, the memory contains instructions recorded therein which, when executed by the processor, may further cause the processor to link the FAS tree to the first FAS dataset and the first FAS element with the unique first FAS ID.

In any of the aspects or embodiments described above and herein, the memory contains instructions recorded therein which, when executed by the processor, may further cause the processor to display the first FAS dataset with the unique first FAS ID in the FAS tree.

In any of the aspects or embodiments described above and herein, the memory contains instructions recorded therein which, when executed by the processor, may further cause the processor to display the first FAS dataset in the FAS tree according to an engineering industry standard.

In any of the aspects or embodiments described above and herein, the memory contains instructions recorded therein which, when executed by the processor, may further cause the processor to: index, in the three-dimensional CAD model of the component, a geometrical representation of a non-surface geometrical element of the three-dimensional CAD model as a second FAS element by assigning the geometrical representation a unique second FAS ID which associates the second FAS element with the component; and store at least one second scalar attribute for the second FAS element as a second FAS dataset in the FAS database and assign the unique second FAS ID to the second FAS dataset. The plurality of FAS elements includes the second FAS element.

In any of the aspects or embodiments described above and herein, the non-surface geometrical element may be one of a point, a line, an axis, a plane, or a volume of the three-dimensional CAD model.

In any of the aspects or embodiments described above and herein, the system may further include a communication network in signal communication with the processor.

According to another aspect of the present disclosure, which the Applicant expressly reserves the right to claim independently, a method for augmenting a three-dimensional model of a component in a computer-aided design (CAD) environment is provided. The method includes indexing, in a three-dimensional CAD model of the component, a first surface representation of a first component surface of the three-dimensional CAD model as a first function-attributed surface (FAS) element by assigning the first surface representation a unique first FAS ID which associates the first FAS element with the component and indexing, in the three-dimensional CAD model of the component, a second surface representation of a second component surface of the three-dimensional CAD model as a second FAS element by assigning the second surface representation a unique second FAS ID which associates the second FAS element with the component. The first component surface and the second component surface are part of the plurality of component surfaces of the three-dimensional CAD model of the component. The method further includes storing at least one first scalar attribute for the first FAS element as a first FAS dataset in a FAS database and assigning the unique first FAS ID to the first FAS dataset and storing at least one second scalar attribute for the second FAS element as a second FAS dataset in the FAS database and assigning the unique second FAS ID to the second FAS dataset. The method further includes configuring the three-dimensional CAD model to, when executed in the CAD environment, display on a screen associated with the CAD environment a FAS tree that includes a plurality of FAS elements associated with the component and corresponding to respective component surfaces of the plurality of component surfaces. The plurality of FAS elements include the first FAS element and the second FAS element.

In any of the aspects or embodiments described above and herein, the method may further include linking the FAS tree to the first FAS dataset and the first FAS element with the unique first FAS ID.

In any of the aspects or embodiments described above and herein, the method may further include displaying the first FAS dataset with the unique first FAS ID in the FAS tree.

In any of the aspects or embodiments described above and herein, displaying the first FAS dataset may include displaying the first FAS dataset formatted according to an engineering industry standard.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a schematic block diagram of an exemplary computer system, in accordance with one or more embodiments of the present disclosure.
FIG. 2 illustrates a flowchart depicting a method for augmenting a three-dimensional model of a component in a computer-aided design (CAD) environment, in accordance with one or more embodiments of the present disclosure.
FIG. 3 illustrates a perspective view of a three-dimensional CAD model of an exemplary component, in accordance with one or more embodiments of the present disclosure.
FIG. 4 illustrates perspective views of CAD-based surface representations extracted from surfaces of the CAD model of FIG. 3, in accordance with one or more embodiments of the present disclosure.
FIG. 5 illustrates a block diagram of a function-attributed surface (FAS) system, in accordance with one or more embodiments of the present disclosure.
FIG. 6 illustrates a perspective view of a FAS element corresponding to a surface representation extracted from a surface of an exemplary CAD model, in accordance with one or more embodiments of the present disclosure.
FIG. 7A-B illustrate exemplary FAS system hierarchy trees, in accordance with one or more embodiments of the present disclosure.
FIG. 8 illustrates a block diagram of a product manufacturing information (PMI) data structure, in accordance with one or more embodiments of the present disclosure.
FIG. 9 illustrates an exemplary graphical user interface (GUI) for receiving PMI from a user, in accordance with one or more embodiments of the present disclosure.
FIG. 10 illustrates an exemplary PMI dataset associated with a particular FAS element, in accordance with one or more embodiments of the present disclosure.
FIG. 11 illustrates a FAS tree linked with a FAS element and associated FAS dataset, in accordance with one or more embodiments of the present disclosure.

### DETAILED DESCRIPTION

The present disclosure includes systems and methods for augmenting a three-dimensional model of a component in a computer-aided design (CAD) environment. In particular, the systems and methods of the present disclosure provide a substantial improvement to conventional two-dimensional engineering drawings (e.g., isometric and axonometric drawings) used in component design and manufacturing and provide a three-dimensional definition of components which may be completely encoded using digital parameters and native CAD functionality.

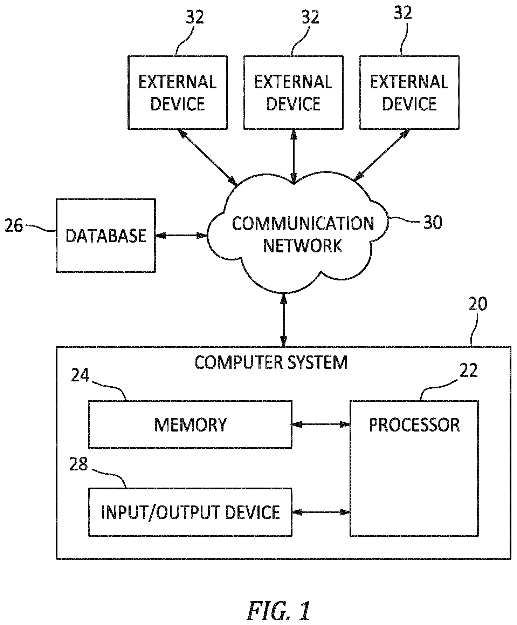

Referring to FIG. 1, a diagram of an exemplary computer system 20 is shown. The computer system 20 may be configured to implement one or more aspects of the present disclosure, however, the present disclosure is not limited to this particular computer system embodiment. The computer system 20 includes a processor 22 in signal communication with memory 24. The processor 22 may be any type of computing device, computational circuit, or processing circuit capable of executing a series of instructions that are stored in memory 24. The processor 22 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. The instructions stored in memory 24 may represent one or more algorithms for controlling the aspects of the computer system 20, and the stored instructions are not limited to any particular form (e.g., program files, system data, buffers, drivers, utilities, system programs, etc.) provided they can be executed by the processor 22. The memory 24 may be a non-transitory computer readable storage medium configured to store instructions that when executed by the processor 22, cause the processor 22 to perform or cause the performance of certain functions. The memory 24 may be a single memory device or a plurality of memory devices. A memory device may include a storage area network, network attached storage, as well as a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the computer system 20 may be achieved by the use of hardware, software, firmware, or any combination thereof.

In various embodiments, the computer system 20 may include a database 26 in signal communication with the processor 22. In various embodiments, the database 26 may be located external to the computer system 20 and in signal communication with the computer system 20 via any wired or wireless protocol. In various other embodiments, the database 26 may be integral to the computer system 20. For example, the database 26 may be integrated with the memory 24. In various embodiments, the computer system 20 may also include input (e.g., a keyboard, a touch screen, etc.) and output devices (e.g., a monitor, sensor readouts, data ports, etc.) (hereinafter input/output device 28), in signal communication with the processor 22, that enable a user to input instructions, receive data, etc.

The computer system 20 may be connected to a communication network 30. The communication network 30 may include any suitable electronic communication network or combination of electronic communication networks including, but not limited to, wired and/or wireless local area networks, internet-based networks, cloud-based storage and communication networks, and the like. The communication network 30 may allow remote electronic communications between the computer system 20 and one or more devices such as the database 26 and/or one or more external devices 32 including, for example, computer workstations, manufacturer-based computers such as computer-aided manufacturing (CAM) computers, manufacturing equipment such as additive manufacturing equipment, component casting equipment, and component scanning equipment, etc.

Referring to FIGS. 1- 3, the present disclosure includes a method 200 for describing a component in a computer-aided design (CAD) environment. For ease of description, the method 200 is described below with reference to the computer system 20 of FIG. 1. The method 200, however, may alternatively be performed with other computer system configurations. Unless otherwise noted herein, it should be understood that the steps of method 200 are not required to be performed in the specific sequence in which they are discussed below and, in various embodiments, the steps of method 200 may be performed separately or simultaneously.

Step 202 of the method 200 includes receiving a three-dimensional CAD model 300 (e.g., a boundary definition model) of a component with the computer system 20 using a suitable CAD system, platform, or software (which may also be referred to herein as a "CAD environment"). The present disclosure is not limited to any particular CAD system, platform, or software. The CAD model 300 includes a plurality of component surfaces 302 which may be exterior and/or interior surfaces of the CAD model 300 for a modeled component. The CAD model 300 may additionally include points, lines, axes, planes, surfaces, volumes, etc. of the modeled component. Accordingly, the CAD model 300 may include geometric features of the component which may be used for manufacturing and/or assembly of the modeled component. The CAD model 300 may be stored in memory 24, the database 26, or one or more external device 32 for use by the computer system 20. The CAD model 300 may be stored as a single file or as multiple files which are readable by compatible CAD software. In various embodiments, step 202 may include generating the CAD model 300, for example, within the CAD environment.

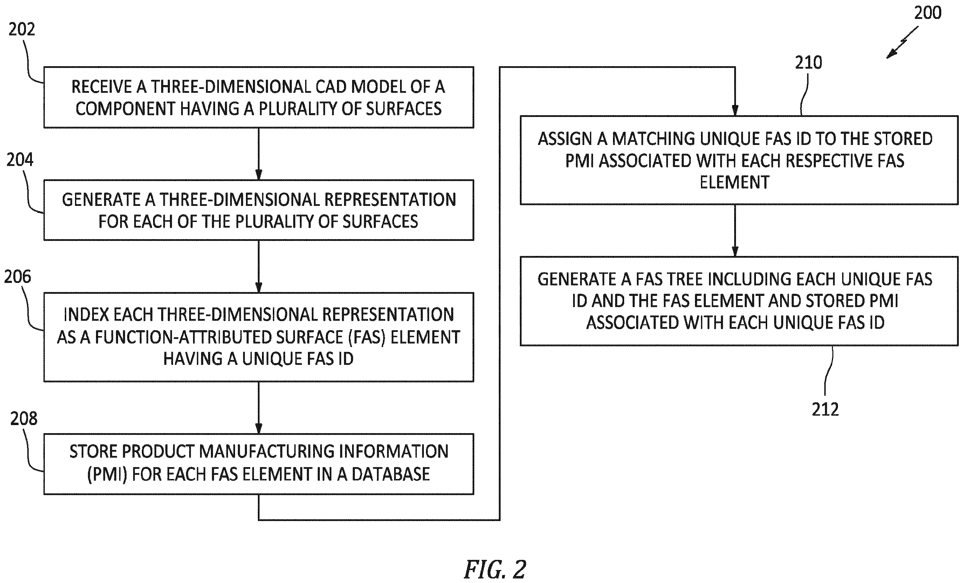

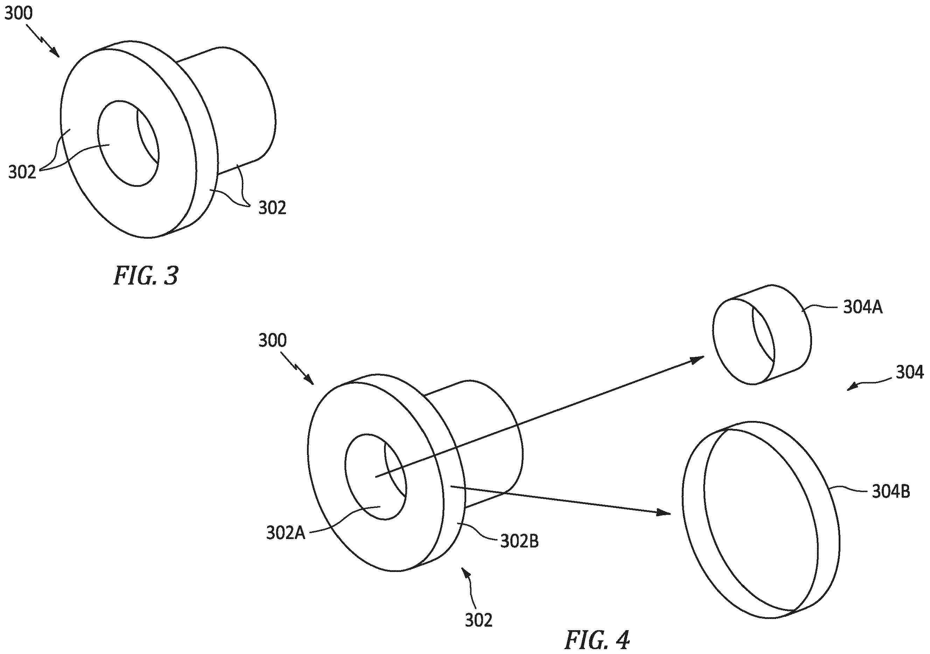

Referring to FIGS. 2-4, step 204 of the method 200 includes extracting surface information from the CAD model 300 and generating a CAD-based surface representation 304 of each of the surfaces of the plurality of component surfaces 302 of the CAD model 300. The CAD-based surface representation 304 may be a three-dimensional surface representation as shown, for example, in FIG. 4, which illustrates a first surface representation 304A of a cylindrical surface extracted from a bore hole of the CAD model 300. In one example of the present disclosure method 200, as illustrated in FIG. 4, step 202 may include generating the first surface representation 304A of a first component surface 302A of the plurality of component surfaces 302. Step 202 may further include generating a second surface representation 304B of a second component surface 302B of the plurality of component surfaces 302 which is different than the first component surface 302A. The surface representation 304 may be generated in the CAD environment and may be a unique CAD model which is independent of the CAD model 300 of the component. Each surface representation 304 may be stored in the CAD environment, independent of the CAD model 300.

Referring to FIGS. 2-7, step 206 of the method 200 includes indexing each surface representation 304 as a function-attributed surface (FAS) element 500 by assigning each surface representation 304 a unique FAS ID 502 which associates each respective FAS element 500 with the component represented by the CAD model 300. Accordingly, in combination with the step 204, each surface of the plurality of component surfaces 302 of the CAD model 300 may be extracted to generate a respective plurality of CAD-based surface representations 304, which may each be assigned respective unique FAS IDs 502, thereby designating the surface representations 304 as FAS elements 500 associated with the component represented by the CAD model 300. In one example of the present disclosure method 200, as illustrated in FIG. 4, step 206 may include indexing the first surface representation 304A of a first component surface 302A of the plurality of component surfaces 302 by assigning the first surface representation 304A a unique first FAS ID 502. For further example, Step 206 may additionally include indexing a second surface representation 304B of a second component surface 302B of the plurality of component surfaces 302 by assigning the second surface representation 304B a unique second FAS ID 502, which is different than the first FAS ID 502. As will be described in further detail, the FAS elements 500 may be used to describe the characteristics of the modeled component so as to obviate the need for conventional two-dimensional engineering drawings (e.g., GD&T drawings) in component design and manufacturing processes. For clarity, the term "FAS element" is described herein with respect to surface representations of three-dimensional CAD models, however, it should be understood that the FAS element 500 may represent any kind of geometrical element such as, but not limited to, points, lines, axes, planes, surfaces, volumes, etc.

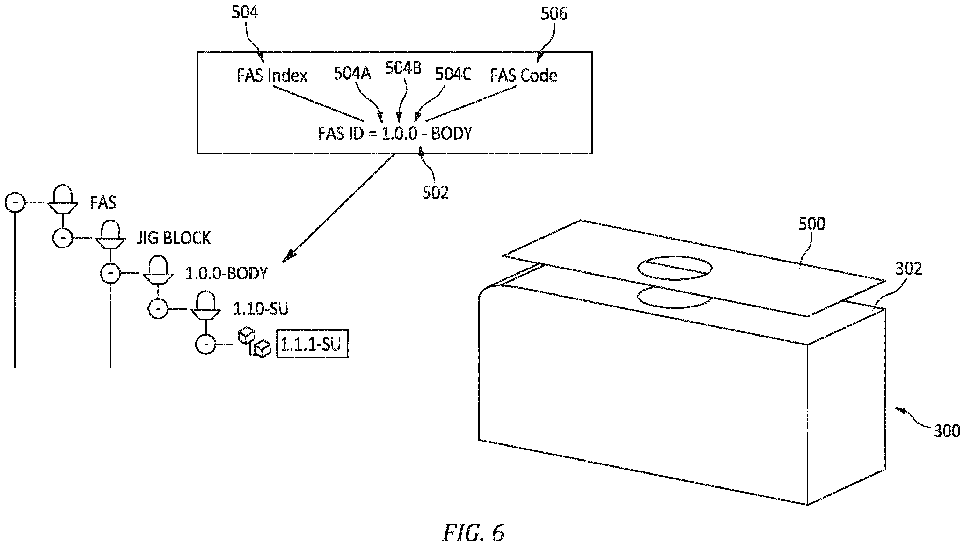

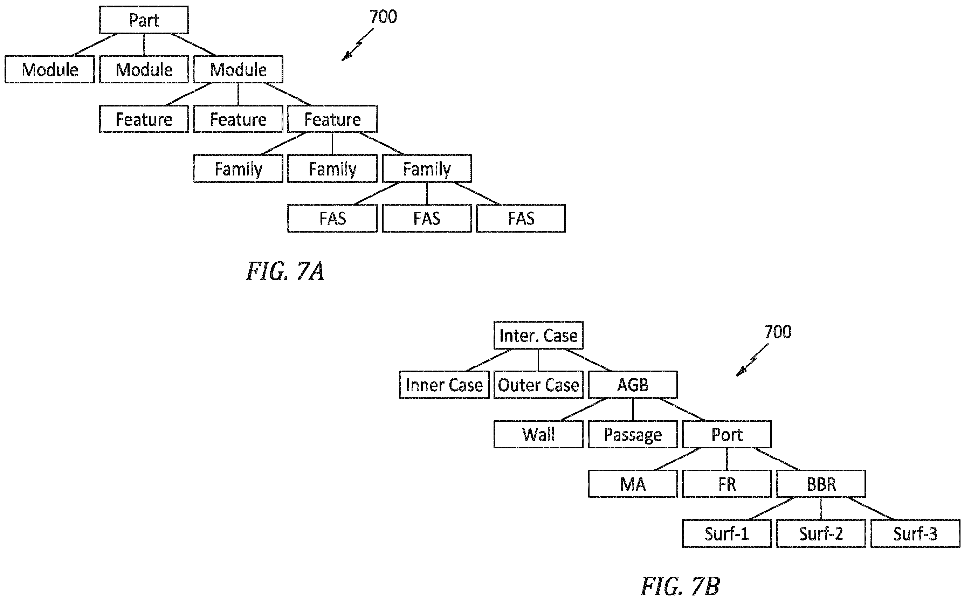

As shown, for example, in FIG. 6, the FAS ID 502 may include both FAS index number 504 and FAS code 506 elements which may be determined based on a predetermined FAS nomenclature 508. The FAS index number 504 may be used to identify a logical relationship between elements of a component feature, a component, a module, or a broader system or part including multiple components. For example, with reference to the exemplary FAS IDs 502 of FIG. 6 and the exemplary FAS hierarchy trees 700 shown in FIGS. 7A and 7B, a first digit 504A of the FAS index number 504 may refer to one or more structural features or portions of a particular module. A second digit 504B of the FAS index number 504 may refer to one or more families of a feature. A third digit 504C of the FAS index number 504 may refer to one or more surfaces of a family. Alternatively, in various embodiments, the FAS ID 502 may be represented by a number or string of characters (e.g., a Unicode 13 string of characters) and the present disclosure is not limited to a particular configuration of the FAS ID 502. FIG. 6 illustrates an exemplary component having a FAS element 500 which is representative of a component surface of the exemplary component.

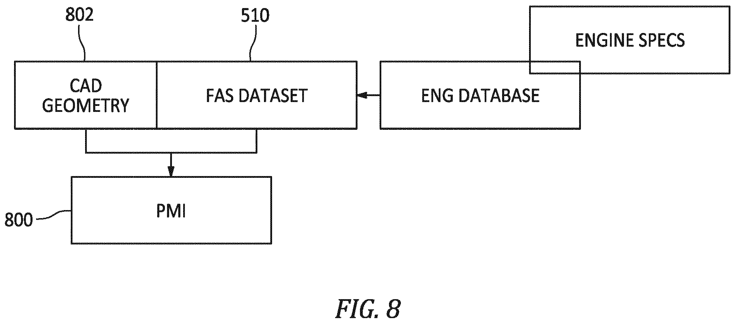

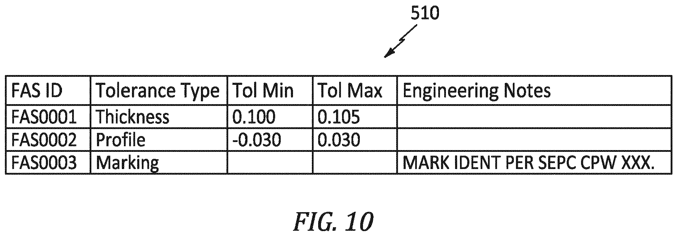

Referring to FIGS. 2-11, step 208 of the method 200 includes storing information associated with each FAS element 500. The stored information associated with each FAS element 500 may be stored as one or more scalar attribute of a respective component surface 302 (see, e.g., FIG. 10). The scalar attribute for a FAS element 500 may include product manufacturing information (PMI) 800. As shown in the block diagram of FIG. 8, at least a portion of the PMI 800 for each FAS element 500 may be stored as a FAS dataset 510. For example, PMI 800 for a first FAS element 500 may be stored in a first FAS dataset 510, PMI 800 for a second FAS element 500 may be stored in a second FAS dataset 510, etc. The PMI 800 for each FAS element 500 may include the GD&T information, associated with the respective component surface of the plurality of component surfaces 302 represented by each FAS element 500, used for manufacturing an associated component. The GD&T information may include, for example, at least one dimensional tolerance requirement for the component surface represented by the respective FAS element 500. The FAS dataset 510 for each FAS element 500 may further include PMI 800 such as information and specifications associated with the respective component and/or equipment in which the respective component is used (e.g., a gas turbine engine). The FAS dataset 510 for each FAS element 500 may further include PMI 800 including additional contextual information associated with each FAS element 500 such as, but not limited to, stress peak area, airflow direction with respect to the component surface represented by the FAS element 500, stack-up information (e.g., bearing stack-up information), design notes, etc. The FAS dataset 510 for each FAS element 500 may further include PMI 800 such as life cycle information for the associated component or equipment, repair information, and/or information gathered during component and/or equipment operation which may be used for future part design. As shown in the block diagram of FIG. 8, at least another portion of the PMI 800 may be CAD geometry 802 (e.g., component surface geometry) for the FAS element 500 which is maintained in the CAD environment.

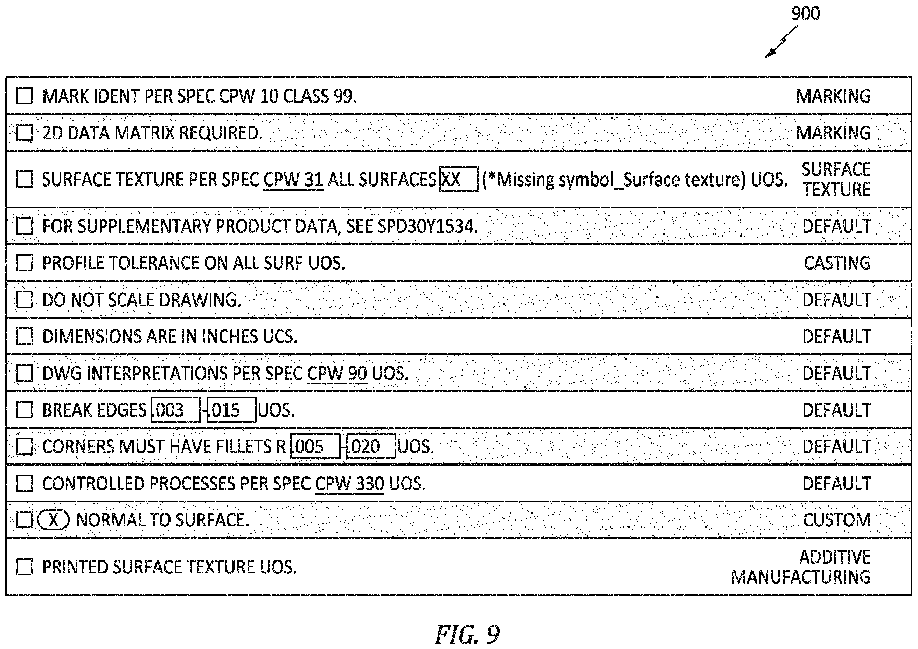

In various embodiments, step 208 may further include generating a graphical user interface (GUI) 900 as shown, for example, in FIG. 9. The GUI 900 may be used to prompt a user to enter additional PMI 800 for a particular FAS element 500 which may be stored in the respective FAS dataset 510. Accordingly, step 208 may include receiving additional PMI 800 from a user via the GUI 900.

As discussed above, the FAS dataset 510 may be stored in the database 26 independent of the CAD environment and may be linked to the FAS element 500 (e.g., linked to the CAD software file including the FAS element 500), as will be discussed in further detail. In various other embodiments, both the FAS element 500 and the FAS dataset 510 may be maintained within the CAD environment (e.g., within a particular CAD software file). In still other various embodiments, a single software file may include the combined and reformatted FAS element 500 data extracted from the CAD environment as well as the FAS dataset 510 (e.g., using a STEP AP242 standard). The present disclosure is not limited to any particular system or method for storage of the FAS element 500 CAD geometry 802 data or the PMI 800 contained within the FAS dataset 510.

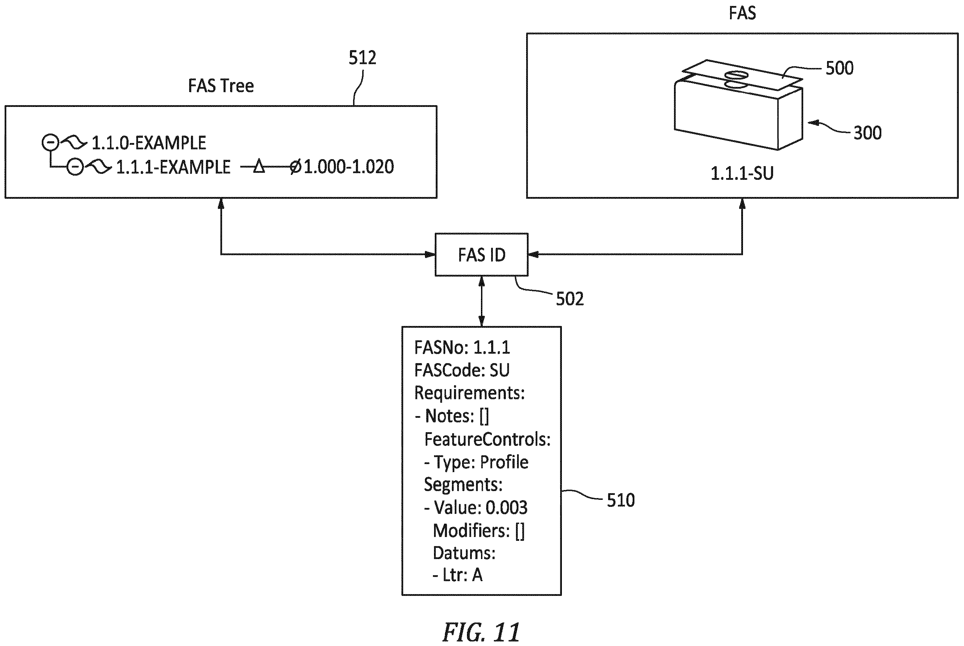

FIGS. 10 and 11 illustrate exemplary FAS datasets 510. As shown in FIG. 10, in various embodiments, the FAS dataset 510 may include PMI 800 defined by one or more scalar attributes. The PMI 800 included in the FAS dataset 510 may be formatted as a machine-readable language. For more complex components, the PMI 800 may be included in one or more machine-readable language strings. For example, the PMI 800 for the FAS dataset 510 may be included in a YAML format, as shown in FIG. 11. However, the present disclosure is not limited to the use of a YAML format for the FAS dataset 510 and other machine-readable languages may be considered such as, but not limited, to XML, HTML, SGML, etc. As also shown in FIG. 11, the PMI 800 may be defined using an object-oriented structure string including scalar and/or nonscalar variables and attributes. Accordingly, the present disclosure system and method allows any component information to be configured as customized digital information which can be reused by computer software, for example, manufacturing software, outside of the CAD environment. Accordingly, the present disclosure system and method is not limited to attributes or properties provided by default in the CAD environment.

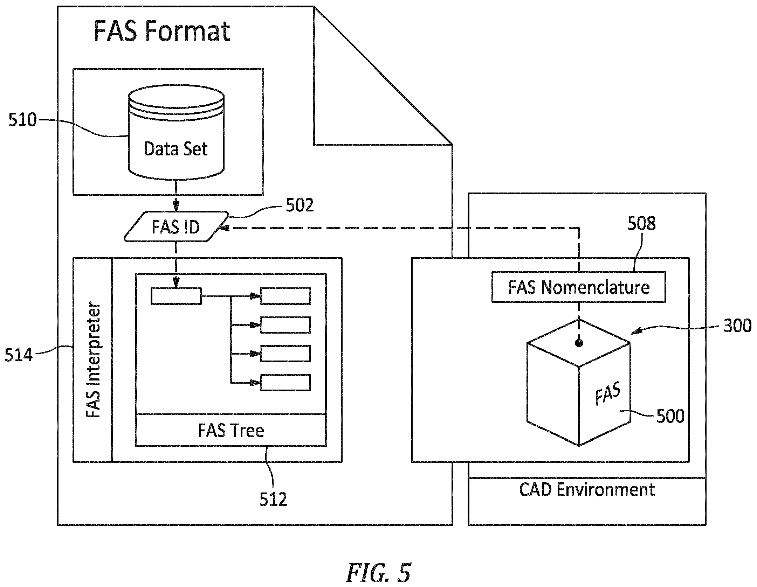

Referring to FIGS. 2, 5, and 11, step 210 of method 200 includes indexing each FAS dataset 510 by assigning each particular FAS dataset 510 the unique FAS ID 502 corresponding to the FAS element 500 for which the particular FAS dataset 510 describes. In other words, each FAS element 500 and associated FAS dataset 510 are assigned a matching FAS ID 502, thereby linking each FAS element 500 with an associated FAS dataset 510 as shown, for example, in FIGS. 5 and 11.

Referring to FIGS. 2, 5, and 11, step 212 of the method 200 includes generating a FAS tree 512. The FAS tree 512 provides a hierarchical view of FAS elements 500 indexed by FAS ID 502 and thereby associating the FAS elements 500 with their respective family, feature, module, part, etc. (see FIG. 7A). The FAS tree 512 may include a plurality of the FAS elements 500 corresponding to and representative of the respective plurality of component 302 of the CAD model 300 for a component. As shown in FIGS. 5 and 11, the FAS tree 512 is linked to each FAS element 500 and associated FAS dataset 510 by the unique FAS ID 502. The information (e.g., PMI) for each FAS dataset 510 is paired to each respective FAS element 500 and displayed in the FAS tree 512. In other words, the FAS tree 512 is dynamically linked to the three-dimensional CAD model 300, via the unique FAS IDs 502 assigned to each of the respective FAS elements 500 and may provide users with greater information than would otherwise be available from a two-dimensional isometric or axonometric drawing for a component.

Generating of the FAS tree 512 may include the use of a FAS interpreter 514, which is a dedicated function for representation of the machine-readable FAS dataset 510 information in an engineering industry standard format for GD&T information. For example, the computerreadable language of the FAS dataset 510 may be formatted using the American Society for Mechanical Engineers (ASME) Y14.5 engineering standard as shown, for example, in FIGS. 6 and 11. Accordingly, a FAS element 500 may be identified by the FAS ID 502 and described using the PMI and other information found in the FAS dataset 510 linked to the FAS element 500 by the FAS ID 502, so that the CAD geometry information and PMI can be directly used (e.g., by a manufacturer). The present disclosure is not limited to a particular engineering standard for display by the FAS tree 512. The representation state of the FAS tree 512 is generated automatically so that no formatting is required by a user in order to generate and manage the representation state. Component attributes may be defined by the user and the appearance/clarity of the information may be configured automatically by the FAS interpreter 514, in comparison to a conventional two-dimensional component view where component information must be properly located by the user in order to make the engineering definition clear and easy to interpret.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Accordingly, the present disclosure is not to be restricted except in light of the attached claims and their equivalents.

## Claims

1. A method for augmenting a three-dimensional model (300) of a component in a computer-aided design (CAD) environment, the method comprising:
indexing, in a three-dimensional CAD model (300) of the component, a first three-dimensional surface representation (304A) of a first component surface (302A) of the three-dimensional CAD model (300) as a first function-attributed surface (FAS) element (500) by assigning the first three-dimensional surface representation (304A) a unique first FAS ID (502) which associates the first FAS element (500) with the component, the first component surface (302A) being one of a plurality of component surfaces (302A) of the three-dimensional CAD model (300) of the component;
storing at least one first scalar attribute for the first FAS element (500) as a first FAS dataset (510) and assigning the unique first FAS ID (502) to the first FAS dataset (510); and
configuring the three-dimensional CAD model (300) to, when executed in the CAD environment, display on a screen associated with the CAD environment a FAS tree (512) that includes a plurality of FAS elements (500) associated with the component and corresponding to respective component surfaces (302A, 302B, 302C) of the plurality of component surfaces (302), the plurality of FAS elements (500) including the first FAS element (500).

2. The method of claim 1, further comprising:
indexing, in the three-dimensional CAD model (300) of the component, a second three-dimensional surface representation (304B) of a second component surface (302A) of the three-dimensional CAD model (300) as a second FAS element (500) by assigning the second three-dimensional surface representation (304B) a unique second FAS ID (502) which associates the second FAS element (500) with the component; and
storing at least one second scalar attribute for the second FAS element (500) as a second FAS dataset (510) in a FAS database (26) and assigning the unique second FAS ID (500) to the second FAS dataset (510);
wherein the plurality of FAS elements (500) includes the second FAS element (500).

3. The method of claim 1 or 2, further comprising linking the FAS tree (512) to the first FAS dataset (510) and the first FAS element (500) with the unique first FAS ID (502).

4. The method of any preceding claim, further comprising displaying the first FAS dataset (510) with the unique first FAS ID (502) in the FAS tree (512).

5. The method of claim 4, wherein displaying the first FAS dataset (510) includes displaying the first FAS dataset (510) formatted according to an engineering industry standard.

6. The method of any preceding claim, further comprising:
generating a graphical user interface (900); and
receiving product manufacturing information (PMI) (800) for the first FAS element (500) from a user via the graphical user interface (900) and storing the PMI (800) in the first FAS dataset (510).

7. The method of claim 1, further comprising:
indexing, in the three-dimensional CAD model (300) of the component, a geometrical representation of a non-surface geometrical element of the three-dimensional CAD model (300) as a second FAS element (500) by assigning the geometrical representation a unique second FAS ID (502) which associates the second FAS element (500) with the component; and
storing at least one second scalar attribute for the second FAS element (500) as a second FAS dataset (510) in the FAS database (26) and assigning the unique second FAS ID (502) to the second FAS dataset (510);
wherein the plurality of FAS elements (500) includes the second FAS element (502).

8. The method of claim 8, wherein the non-surface geometrical element is one of a point, a line, an axis, a plane, or a volume of the three-dimensional CAD model (300).

9. A system (20) for augmenting a three-dimensional model (300) of a component in a computer-aided design (CAD) environment, the system (20) comprising:
a processor (22); and
memory (24) in signal communication with the processor (22), the memory (24) containing instructions recorded therein which, when executed by the processor (22), cause the processor (22) to:
index, in a three-dimensional CAD model (300) of the component, a first three-dimensional surface representation (304A) of a first component surface (302A) of the three-dimensional CAD model (300) as a first function-attributed surface (FAS) element (500) by assigning the first three-dimensional surface representation (304A) a unique first FAS ID (502) which associates the first FAS element (500) with the component, the first component surface (302A) being one of a plurality of component surfaces (302) of the three-dimensional CAD model (300) of the component;
store at least one first scalar attribute for the first FAS element (500) as a first FAS dataset (510) in a FAS database (510) and assign the unique first FAS ID (502) to the first FAS dataset (510); and
configure the three-dimensional CAD model (300) to, when executed in the CAD environment, display on a screen associated with the CAD environment a FAS tree (512) that includes a plurality of FAS elements (500) associated with the component and corresponding to respective component surfaces (302A, 302B, 302C) of the plurality of component surfaces (302), the plurality of FAS elements (500) including the first FAS element (500).

10. The system (20) of claim 9, wherein the memory (24) contains instructions recorded therein which, when executed by the processor (22), further cause the processor (22) to:
index, in the three-dimensional CAD model (300) of the component, a second three-dimensional surface representation (304B) of a second component surface (302B) of the three-dimensional CAD model (300) as a second FAS element (500) by assigning the second three-dimensional surface representation (304B) a unique second FAS ID (502) which associates the second FAS element (500) with the component; and
store at least one second scalar attribute for the second FAS element (500) as a second FAS dataset (510) in the FAS database (26) and assign the unique second FAS ID (502) to the second FAS dataset (510);
wherein the plurality of FAS elements (500) includes the second FAS element (500).

11. The system (20) of claim 9 or 10, wherein the memory (24) contains instructions recorded therein which, when executed by the processor (22), further cause the processor (22) to link the FAS tree (512) to the first FAS dataset (510) and the first FAS element (500) with the unique first FAS ID (502).

12. The system (20) of any of claims 9 to 11, wherein the memory (24) contains instructions recorded therein which, when executed by the processor (22), further cause the processor (22) to display the first FAS dataset (510) with the unique first FAS ID (502) in the FAS tree (512).

13. The system (20) of claim 12, wherein the memory (24) contains instructions recorded therein which, when executed by the processor (22), further cause the processor (22) to display the first FAS dataset (510) in the FAS tree (512) according to an engineering industry standard.

14. The system (20) of claim 9, wherein the memory (24) contains instructions recorded therein which, when executed by the processor (22), further cause the processor (22) to:
index, in the three-dimensional CAD model (300) of the component, a geometrical representation of a non-surface geometrical element of the three-dimensional CAD model (300) as a second FAS element (500) by assigning the geometrical representation a unique second FAS ID (502) which associates the second FAS element (500) with the component; and
store at least one second scalar attribute for the second FAS element (500) as a second FAS dataset (510) in the FAS database (26) and assign the unique second FAS ID (502) to the second FAS dataset (510);
wherein the plurality of FAS elements (500) includes the second FAS element (500);
wherein the non-surface geometrical element is optionally one of a point, a line, an axis, a plane, or a volume of the three-dimensional CAD model (300).

15. The system (20) of any of claims 9 to 14, further comprising a communication network (30) in signal communication with the processor (22).
